(19) **Europäisches Patentamt / European Patent Office / Office européen des brevets**

(11) **EP 4 776 645 A1**

(12) # EUROPEAN PATENT APPLICATION

(43) Date of publication:
**15.07.2026 Bulletin 2026/29**

(21) Application number: **26150983.0**

(22) Date of filing: **09.01.2026**

(51) International Patent Classification (IPC):
***H04N 23/71*** (2023.01)   ***H04N 23/72*** (2023.01)
***H04N 23/73*** (2023.01)

(52) Cooperative Patent Classification (CPC):
**H04N 23/71; H04N 23/72; H04N 23/73**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:   **13.01.2025   US 202563744604 P**
       **17.12.2025   US 202519423543**

(71) Applicant: **Synaptics Incorporated**
       **San Jose, CA 95131 (US)**

(72) Inventors:
• **Shanmuga Vadivel, Karthikeyan**
  **San Jose, CA 95131 (US)**
• **Raju, Eldhose**
  **San Jose, CA 95131 (US)**
• **M.N., Palanesami**
  **San Jose, CA 95131 (US)**
• **Rajaraman, Sujatha**
  **San Jose, CA 95131 (US)**
• **Scheffer, Zacchaeus**
  **San Jose, CA 95131 (US)**

(74) Representative: **J A Kemp LLP**
       **80 Turnmill Street**
       **London EC1M 5QU (GB)**

(54) **DYNAMIC REGION-OF-INTEREST (ROI)-BASED AUTO-EXPOSURE CONTROL**

(57)    This disclosure provides methods, devices, and systems for exposure control for digital images. The present implementations more specifically relate to dynamic region-of-interest (ROI) based auto-exposure control. In some implementations, an imaging system may a first image in a series of images using a first exposure setting. The imaging system may detect one or more regions of interest (ROI) in the first image. The imaging system may determine a first brightness value associated with a first ROI in the first image. The imaging system may determine a second exposure setting based on the first brightness value. The imaging system may capture a second image in the series of images, subsequent to the first image, using the second exposure setting.

**EP 4 776 645 A1**

**Description**

CROSS-REFERENCE TO RELATED APPLICATIONS

This application claims the benefit of U.S. Provisional Application No. 63/744,604, titled "DYNAMIC REGION-OF-INTEREST (ROI)-BASED AUTO-EXPOSURE CONTROL" and filed on January 13, 2025, which is incorporated by reference herein in its entirety.

TECHNICAL FIELD

The present implementations relate generally to exposure control for digital images, and specifically to dynamic region-of-interest (ROI)-based auto-exposure control.

BACKGROUND OF RELATED ART

Computer vision is a field of artificial intelligence (AI) that mimics the human visual system to draw inferences about an environment from images or video of the environment. Example computer vision technologies include object detection, object classification, object identification, and object tracking, among other examples. Object identification encompasses various techniques for identifying a specific object that is detected in an image (e.g., facial recognition to identify a specific person).

In some instances, the brightness of an image can affect the accuracy of object identification. For example, an image that is too bright or too dim can obscure details on an object that may be useful for object identification. The brightness of images captured by an imaging device can be controlled or adjusted via one or more exposure settings (e.g., exposure time, sensor gain). Some imaging devices have automated exposure controls (also referred to as "auto-exposure" controls) to dynamically adjust the exposure settings based on feedback or hysteresis from images previously captured by the imaging device. However, many existing auto-exposure techniques consider the brightness of a captured image as a whole in determining how to adjust the exposure settings for capturing a subsequent image. This often results in images that are too bright or too dim in certain regions, such as regions of interest (ROIs) containing object details that may be useful for object identification or other computer vision applications.

SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method of capturing a first image in a series of images using a first exposure setting; detecting one or more regions of interest (ROI) in the first image; determining a first brightness value associated with a first ROI in the first image; determining a second exposure setting based on the first brightness value; and capturing a second image in the series of images, subsequent to the first image, using the second exposure setting.

Another innovative aspect of the subject matter of this disclosure can be implemented in a computing system, which includes an imaging sensor, one or more processors and a memory coupled to the one or more processors. The memory stores instructions that, when executed by the one or more processors, cause the computing system to capture a first image in a series of images using a first exposure setting; detect one or more regions of interest (ROI) in the first image; determine a first brightness value associated with a first ROI in the first image; determine a second exposure setting based on the first brightness value; and capture a second image in the series of images, subsequent to the first image, using the second exposure setting.

BRIEF DESCRIPTION OF THE DRAWINGS

The present implementations are illustrated by way of example and are not intended to be limited by the figures of the accompanying drawings.

FIG. 1 shows a block diagram of an example imaging system, according to some implementations.

FIG. 2 shows a decision flow diagram for an example process for dynamic auto-exposure control, according to some implementations.

FIG. 3 shows another block diagram of an example imaging system, according to some implementations.

FIG. 4 shows an illustrative flowchart depicting an example operation for dynamic auto-exposure control, according to some implementations.

DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

As described above, computer vision techniques may include object identification, which may be used to identify a specific object in an image. Object identification techniques may identify an object based on visual details on the object in the image. A brightness (which may also be referred to as luminance) of the image can affect the accuracy of object identification. An image that is too bright or too dim can obscure details on the object in the image. The brightness of images captured by an imaging device can be controlled or adjusted via one or more exposure settings. An imaging device may implement an auto-exposure control to dynamically adjust the exposure settings based on feedback or hysteresis from images previously captured by the imaging device. However, many existing auto-exposure controls consider the brightness of a captured image as a whole when determining how to adjust the exposure settings for capturing a subsequent image. Aspects of the present disclosure recognize that such an approach can result in images that are too bright or too dim in certain regions, such as regions of interest (ROIs) containing object details that may be useful for object identification or other computer vision applications. Thus, in some aspects, an auto-exposure control may dynamically adjust exposure settings based on whether the image includes at least one ROI.

Various aspects of this disclosure relate generally to auto-exposure control, and more particularly, to dynamic ROI-based auto-exposure control. In some aspects, an imaging system may be configured to capture a first image in a series of images using a first exposure setting; detect one or more regions of interest (ROIs) in the first image; determine a first brightness value associated with a first ROI in the first image; determine a second exposure setting based on the first brightness value; and capture a second image in the series of images, subsequent to the first image, using the second exposure setting.

Particular implementations of the subject matter described in this disclosure can be implemented to realize one or more of the following potential advantages. By determining an exposure setting based on a brightness of an ROI in the image, aspects of the present disclosure can capture images with enhanced brightness within the ROI. By enhancing the brightness within particular ROIs (such as by increasing or decreasing the brightness to a target or desired level), aspects of the present disclosure can improve the accuracy and reliability of object identification and/or other computer vision techniques.

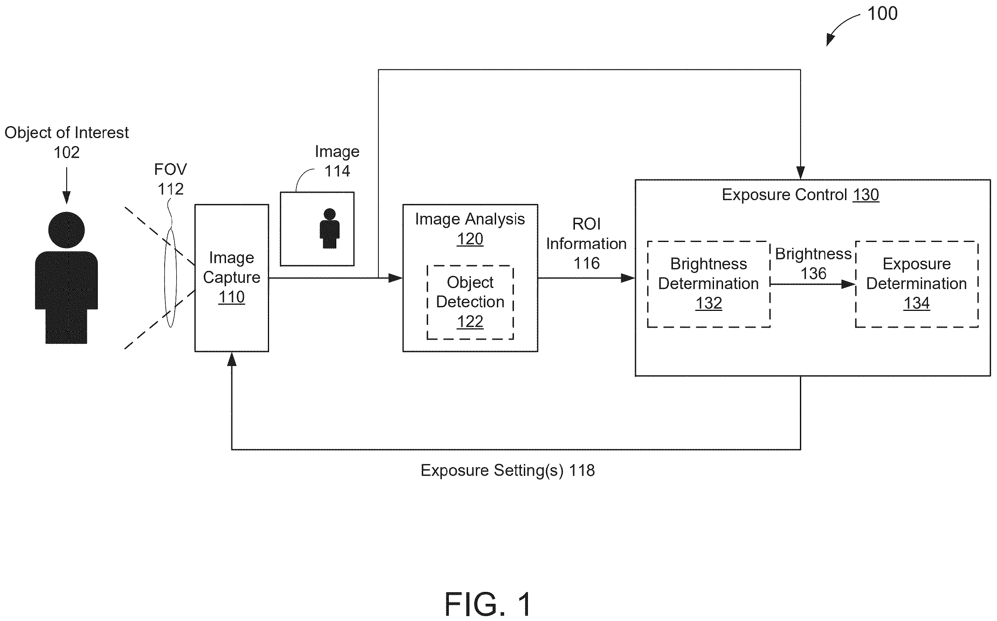

FIG. 1 shows a block diagram of an example imaging system 100, according to some implementations. In some aspects, the imaging system 100 may be configured to detect one or more regions of interest (ROIs), and to adjust one or more exposure settings based on the detected ROIs.

The imaging system 100 includes an image capture component 110, an image analysis component 120, and an exposure control component 130. The image capture component 110 may be any imaging sensor or device (such as a camera) configured to capture a pattern of light in its field-of-view (FOV) 112 and convert the pattern of light to digital images (e.g., image 114). For example, a digital image 114 may include an array of pixels (or pixel values) representing the pattern of light in the FOV 112 of the image capture component 110. In some implementations, the image capture component 110 may continuously (or periodically) capture a series of images representing a digital video. In the example of FIG. 1, an object of interest 102 located within the FOV 112 is depicted as a person. As a result, the image 114 may include the object of interest 102. If multiple objects of interest are included in the FOV 112, the resulting captured image may accordingly include the multiple objects of interest.

The image capture component 110 captures the image 114 using one or more exposure settings. As used herein, an exposure setting is a setting or configuration of the image capture component 110 that affects the amount of light reaching the imaging sensors in the image capture component 110 and/or an amplification of the signal produced by the imaging sensors, thereby affecting the brightness of the resulting image. Examples of exposure settings as used herein include exposure time (which may also be referred to as "shutter speed"), aperture, and gain (which may also be referred to "sensor gain"). In some implementations, the gain may be an analog gain, a digital gain, or a color gain. Depending on various conditions in the FOV 112 (e.g., lighting conditions, object positions) and the exposure settings, various regions of the image 114 may have varying degrees of brightness.

In some aspects, the image analysis component 120 may detect one or more ROIs 116 corresponding to respective objects of interest in the image 114 based on an object detection model 122. The object detection model 122 may be trained or otherwise configured to detect objects of interest in images or video. For example, the object detection model 122 may apply one or more transformations to the pixels in the image 114 to create one or more features that can be used for object detection. More specifically, the object detection model 122 may compare the features extracted from the image 114 with a known set of features that uniquely identify a particular class of objects (such as humans) to determine a presence or location of any object of interest in the image 114. In some implementations, the object detection model 122 may be a neural network model. In some other implementations, the object detection model 122 may be a statistical model. In some implementations, the object detection model 112 may determine, for each detected object of interest in the image, a bounding box indicating the corresponding ROI. The image analysis component 120 may output ROI information 116. The ROI information 116 is data that indicates the ROIs detected, or a lack of ROIs detected, in the image 114.

In some implementations, the ROI information 116 may include an annotated image that includes one or more bounding box(es) corresponding to the ROIs detected in the image 114. In some implementations, the ROI information 116 may include coordinates (e.g., x-y coordinates in a coordinate space of the digital image 114 and/or the image capture component 110) of two or more corners defining each ROI bounding box. It should be appreciated that while in some implementations an ROI may be represented by a rectangular bounding box, in some other implementations, an ROI may be represented by a bounding area of any shape. That is, the ROI need not necessarily be rectangular. For example, in some implementations, a bounding area indicating a corresponding ROI may have a circular shape, an elliptical shape, a square shape, or even an irregular shape (e.g., a shape whose border traces the contours of the object of interest in the image). Further, in some implementations, an ROI may be a segmentation of the object of interest in the image.

In some implementations, the image 114 captured by the image capture component 110 and/or the ROIs detected by the image analysis component 120 may be provided as inputs to another system or component for further processing or analysis. For example, the image 114 and an ROI 116 may be provided to an object identification component to identify the specific object of interest 102 (e.g., identify the specific person) in the ROI 116. Visual details in the image 114, and in particular associated with an object of interest 102 in the image 114, may be useful information for object identification and other computer vision applications applied to the image 114. Aspects of the present disclosure recognize that, if the image 114 is too bright or too dim within the ROI 116, visual details associated with the object of interest 102 may be obscured (e.g., washed out by brightness, too darkened to be detectable). As a result, potentially useful information for object identification and/or other computer vision applications may be lost or unavailable.

The exposure control component 130 is configured to control one or more exposure settings 118 of the image capture component 110 based, at least in part, on the ROI 116. More specifically, the exposure control component 130 may adjust the exposure settings 118 so that the brightness of the ROI 116 in subsequent images captured by the image capture device 110 is within a threshold or target range, and/or converges toward a target. The exposure control component 130 includes a brightness determination component 132 and an exposure determination component 134. The exposure control component 130 may receive the ROI 116 from the image analysis component 120, and may also receive the image 114 from the image capture component 110. The brightness determination component 132 may be configured to determine a brightness for the image 114. As used herein, a brightness (or luminance) for the image refers to a perceived light intensity in an image (e.g., perceived intensity of light radiated or reflected through the scene or by an object in the image). A brightness for the image may be expressed as a numerical value. The exposure determination component 134 may be configured to compute one or more exposure settings 118 to be implemented by the image capture device 110.

In some implementations, the brightness determination component 132 may determine an actual brightness 136 for the image 114 based on the ROI information 116 received from the image analysis component 120 and the image 114 received from the image capture component 110. If the ROI information 116 indicates that at least one ROI is detected in the image 114, then the brightness determination component 132 may compute a brightness value of an ROI in the image 114.

In some implementations, the brightness 136 is expressed as a luma value. Accordingly, the brightness determination component 132 may determine an actual luma value of the image 114 as a whole or of an ROI in the image 114. In some implementations, the brightness determination component 132 first computes the respective luminance values Y of one or more pixels in the image. An equation for computing a luminance value for a pixel $Y_{pixel}$, assuming that the image 114 is in RGB format, is given below as Equation 1:

$$Y_{pixel} = 0.2126R_{pixel} + 0.7152G_{pixel} + 0.0722B_{pixel} \qquad \text{(Equation 1)}$$

where $R_{pixel}$, $G_{pixel}$, and $B_{pixel}$ are the R, G, and B values of the pixel, respectively. In some implementations, the coefficients for $R_{pixel}$, $G_{pixel}$, and $B_{pixel}$ in Equation 1 may differ depending on the standard that the image 114 follows. For example, the coefficients in Equation 1 above are applicable to images following the ITU BT.709 standard. For images that follow the CCIR 601 standard, the coefficients may be different, as shown below in Equation 2:

$$Y_{pixel} = 0.299R_{pixel} + 0.587G_{pixel} + 0.114B_{pixel} \qquad \text{(Equation 2)}$$

If the captured image 114 is not yet converted to an RGB format (e.g., the image 114 is yet to be de-mosaiced), then $Y_{pixel}$ may be computed differently. For example, for Bayer color-filter image data, an equation for computing $Y_{pixel}$ is given below as Equation 3:

$$Y_{pixel} = G_{pixel} \qquad \qquad \text{(Equation 3)}$$

where $G_{pixel}$ is the G value of the pixel.

The brightness determination component 132 may compute the luma value according to Equation 4:

$$Luma = Mean(Y_{pixel}) \hspace{4cm} \text{(Equation 4)}$$

If the image 114 includes one ROI (e.g., the ROI information 116 indicates a single ROI detected), then the brightness determination component 132 computes *Luma* using just the $Y_{pixel}$ values of the pixels in the ROI. That is, the computed luma value is the luma value of the ROI. If the image 114 includes two or more ROIs (e.g., the ROI information 116 indicates multiple ROIs detected), then the brightness determination component 132 computes the *Luma* using just the $Y_{pixel}$ values of the pixels in the largest ROI amongst the two or more ROIs. Alternatively, in some implementations, the brightness determination component 132 may compute the *Luma* using the $Y_{pixel}$ values of the pixels in all of the two or more ROIs.

If the image 114 includes no ROI (e.g., the ROI information 116 indicates no ROIs detected), then the brightness determination component 132 may compute *Luma* using the $Y_{pixel}$ values from the entire image (i.e., $Y_{pixel}$ values from all of the pixels of the image). That is, the computed *Luma* is the luma value of the image as a whole. Alternatively, in some implementations, the brightness determination component 132 may compute the luma using $Y_{pixel}$ values from a portion of the image (e.g., a portion away from a light source in the image). For example, if the image includes a light source in a top portion of the image, then then the brightness determination component 132 may compute *Luma* using $Y_{pixel}$ values from a bottom portion (e.g., the bottom two-third) of the image.

The exposure determination component 134 is configured to determine one or more exposure settings 118 to be used by the image capture device 110 for capturing subsequent images. The exposure control component 130 provides the determined exposure setting(s) 118 to the image capture component 110, which can then capture a subsequent image using the determined exposure settings. That subsequent image may be a basis for a subsequent determination of exposure settings, similar to image 114 described above.

In some implementations, the exposure determination component 134 may compute an exposure setting 118 based on the brightness 136 for the image 114 determined by the brightness determination component 132, the current exposure setting used by the image capture component 110 to capture the image 114, and a set of predetermined values and/or constants. In some implementations, the exposure determination component 134 may compute the exposure setting 118 according to an algorithm that causes the actual brightness 136 for the images (e.g., luma values of the ROI) captured by the image capture component 110 to converge toward a target brightness (e.g., a target luma value). As described above, exposure settings may include exposure time, aperture, and/or gain. Example algorithms and techniques for computing the exposure setting 118 are described below.

The exposure determination component 134 determines an exposure time for the next image (also referred to as the "next exposure time") $E_{next}$ according to an algorithm as shown in Table 1 below.

Table 1

| |
|---|
| if $L_{MIN}$ <= *Luma* <= $L_{MAX}$:<br><br>    $E_{NEXT} = E_{CURRENT}$<br><br>else if *Luma* > 0 and *Luma* < 255:<br><br>    $E_{NEXT} = E_{CURRENT}*(L_{TARGET}/Luma)$<br><br>else if *Luma* == 255:<br><br>    $E_{NEXT} = E_{CURRENT}/factor$<br><br>else if *Luma* == 0:<br><br>    $E_{NEXT} = E_{CURRENT}*factor$ |

If the image 114 includes an ROI, the luma value *Luma* shown in Table 1 is the *Luma* of the ROI (or the largest ROI of multiple ROIs in the image 114). If the image 114 does not include any ROI, the luma value *Luma* in shown in Table 1 is the *Luma* of the image 114 as a whole.

As shown in Table 1, the exposure determination component 134 first compares *Luma* to a range defined by $L_{MIN}$ and $L_{MAX}$. If $L_{MIN}$ <= *Luma* <= $L_{MAX}$, then the exposure determination component 134 sets current exposure time $E_{current}$ (the exposure time used to capture the image 114) as the next exposure time $E_{next}$ for capturing a subsequent image. That is, the next exposure time is the same as the current exposure time. In some implementations, $L_{MIN}$ and $L_{MAX}$ define a range of luma values that are determined empirically to be suitable for image processing and analysis (e.g., object identification).

If *Luma* is outside of the range defined by $L_{MIN}$ and $L_{MAX}$, then the exposure determination component 134 compares *Luma* to the highest and lowest possible luma values of 255 and 0, respectively. If *Luma* is within and not equal to those values, then $E_{NEXT}$ is computed as $E_{NEXT} = E_{CURRENT} * (L_{TARGET} / Luma)$, where $L_{TARGET}$ defines a target luma value. Similar to $L_{MIN}$ and $L_{MAX}$, $L_{TARGET}$ is a target luma value that is determined empirically to be suitable for image processing and analysis (e.g., object identification). In some implementations, the algorithm for determining $E_{NEXT}$ aims to adjust the exposure setting in order to converge the luma values of the ROI included in captured images of the FOV 112 toward the target luma value $L_{TARGET}$.

If *Luma* is equal to the highest possible luma value 255, then $E_{NEXT}$ is computed as $E_{NEXT} = E_{CURRENT} / factor$. If *Luma* is equal to the lowest possible luma value 0, then $E_{NEXT}$ is computed as $E_{NEXT} = E_{CURRENT} * factor$, where factor is a predetermined scalar or constant that can be used to adjust $E_{NEXT}$ in order to cause *Luma* to converge toward the target luma value. Alternatively, in some implementations, $E_{NEXT}$ may be computed as $E_{NEXT} = E_{CURRENT} / factor$ if the image 114 is saturated or over-exposed (e.g., the *Luma* of the image 114 equals or exceeds a predetermined threshold that is above $L_{MAX}$ but may be smaller than the highest possible luma value). Similarly, in some implementations, $E_{NEXT}$ maybe computed as $E_{NEXT} = E_{CURRENT} * factor$ if the image 114 is underexposed (e.g., the *Luma* of the image 114 equals or is below a predetermined threshold that is below $L_{MIN}$ but may be larger than the lowest possible luma value).

As noted above, $L_{MIN}$, $L_{MAX}$, $L_{TARGET}$, and *factor* are predetermined parameters. In some implementations, one or more of these parameters are determined and set empirically. An example set of values for these predetermined parameters are given below in Table 2:

Table 2

| Parameter | Value |
|-----------|-------|
| $L_{TARGET}$ | 80 |
| $L_{MIN}$ | 50 |
| $L_{MAX}$ | 120 |
| *factor* | 2 |

The exposure determination component 134 can also calculate a gain for the next image $G_{NEXT}$ based on the gain for the current image $G_{CURRENT}$, for example, by repeating the algorithm above and substituting $E_{NEXT}$ and $E_{CURRENT}$ for $G_{NEXT}$ and $G_{CURRENT}$, respectively. The exposure control component 130 provides $E_{NEXT}$ and/or $G_{NEXT}$, as the exposure settings 118, to the image capture component 110. The image capture component 110 captures a new image using $E_{NEXT}$ and $G_{NEXT}$, which may be processed by the image analysis component 120 and used for determining exposure settings 118 to be used by the exposure control component 130 to capture the next image in a series of images, as described above.

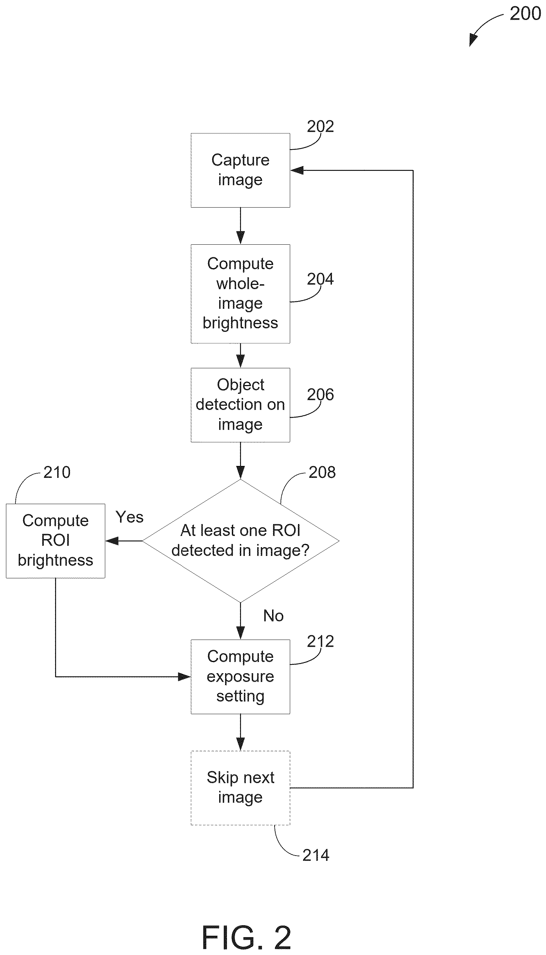

FIG. 2 shows a decision flow diagram for an example process 200 for dynamic auto-exposure control, according to some implementations. Process 200 illustrates a decision flow by which the imaging system 100 may determine an exposure setting to capture a next image.

Process 200 begins with step 202, where the image capture component 110 captures an image (e.g., image 114). At step 204, the brightness determination component 132 computes a brightness for the captured image as a whole. At step 206, the image analysis component 120 may perform object detection on the captured image to detect ROIs in the image, producing ROI information (e.g., ROI information 116). Thus, in process 200, the brightness determination component 132 may compute a brightness for the image as a whole (e.g., using $Y_{pixel}$ values of pixels from the entire image) regardless of whether the image includes an ROI or not, prior to or concurrent with, object detection to detect ROIs in the image. Alternatively, the brightness determination component 132 may determine a brightness for the image as a whole after step 206, as described below.

At step 208, the exposure control component 130 determines whether at least one ROI is detected in the image (e.g., based on ROI information 116 received from the image analysis component 120). If the exposure control component 130 determines that at least one ROI is detected in the image (208 - Yes), then process 200 proceeds to step 210, where the exposure control component 130 (e.g., the brightness determination component 132) computes a brightness value of the ROI in the image (e.g., the luma value of the ROI), which may be provided as the brightness 136 to the exposure determination component 134. Process 200 then proceeds to step 212.

If the exposure control component 130 determines that no ROI is detected in the image (208 - No), then process 200 proceeds to step 212. In some implementations, the brightness determination component 132 may compute the brightness value of the image as a whole here, between steps 208 and 212. That brightness value of the image as a whole may be provided as the brightness 136 to the exposure determination component 134.

At step 212, the exposure determination component 134 computes an exposure setting for a subsequent image capture based on a brightness 136 for the image. As described above, the brightness 136 provided to the exposure determination component 134 may be the brightness of the ROI in the image or the brightness of the image as a whole.

In some implementations, at an optional step 214, the imaging system 100 may skip an image. That is, the imaging system 100 may skip capturing the immediately subsequent image, and instead use the computed exposure setting to capture a further subsequent image. Whether process 200 includes step 214 or not, process 200 then proceeds back to step 202 with the computed exposure setting where the image capture component 110 captures a new image using the computed exposure setting. In some implementations, skipping the image in step 214 may allow the exposure settings to stabilize.

In some implementations, at step 212 the exposure determination component 134 may compute the exposure setting according to the algorithm described above with reference to Table 1. In some other implementations, the exposure determination component 134 may compute the exposure setting according to another algorithm. In particular, this algorithm may use the brightness values from at least two captured images, the current image and a prior image (e.g., the immediately preceding captured image or a further prior captured image), to compute an exposure setting for capturing a next image, such that the luma values converge toward a target. The algorithm may compute the exposure setting according to Equations 5-9 below:

$$E_{1f} = ((L_T - L_1)/(L_T + L_1)) + 1 \qquad \text{(Equation 5)}$$

$$E_{2f} = ((L_T - L_2)/(L_T + L_2)) + 1 \qquad \text{(Equation 6)}$$

$$E_{1T} = E_{1f} * E1 \qquad \text{(Equation 7)}$$

$$E_{2T} = E_{2f} * E2 \qquad \text{(Equation 8)}$$

$$E3 = (E_{1T} + E_{2T}) / 2 \qquad \text{(Equation 9)}$$

In Equations 5-9, E1 and E2 are the exposure settings used to capture the current image and the prior image, respectively. E2 is the exposure setting computed for capturing a subsequent image. $L_T$ is a target luma value, similar to $L_{TARGET}$ in Table 1 above. $L_1$ and $L_2$ are the luma values of the current image and the prior image, respectively. Each of $L_1$ and $L_2$ may be a luma value of an ROI or of an image as a whole depending on whether the pertinent image includes an ROI or not, as described above with reference to Equations 1-4. $E_{1f}$ and $E_{2f}$ are exposure setting adjustment factors for E1 and E2, respectively. Thus, in Equations 5-9, the exposure determination component 134 computes an adjusted exposure setting $E_{1T}$ for the current image based on the luma value for the current image and a target luma value, and an adjusted exposure setting $E_{2T}$ for the prior image based on the luma value for the prior image and the target luma value. The exposure determination component 134 then computes a mean of $E_{1T}$ and $E_{2T}$ to obtain the exposure setting E3 for capturing a subsequent image. Equations 5-9 thus computes E3 according to a sliding window approach, in which values (e.g., luma values, exposure settings) for the current image and a prior image (e.g., the immediately preceding image) are used.

In some implementations, Equations 5-9 may be simplified to Equation 10 below:

$$E3 = \left(\left(\frac{L_T}{L_T + L_1}\right) * E1\right) + \left(\left(\frac{L_T}{L_T + L_2}\right) * E2\right) \qquad \text{(Equation 10).}$$

In some implementations, for the initial two captured images in the process 200, E1 and E2 may be set to predetermined values (e.g., maximum and minimum exposure times or gains, respectively). For example, if E3 is a gain for a subsequent image capture, and E1 and E2 are the current and prior gains, respectively, then predetermined gains may be set for the initial two images. For example, E1 may be set to the maximum gain $gain_{max}$, and E2 may be set to the minimum gain $gain_{min}$. In some implementations, $gain_{max} = 79$ and $gain_{min} = 1$.

Further, in some implementations, $L_T$ may differ depending on the resolution of the images. For example, for VGA resolution images, $L_T$ may be predetermined to have a value of 110, whereas for HD resolution images $L_T$ may be predetermined to have a value of 40.

Further, in some implementations, if one exposure setting (e.g., exposure time) reaches a maximum or minimum while another exposure setting (e.g., gain) is held constant, the same equations may be used to compute values for the another exposure setting while holding constant the exposure setting that has reached the maximum or minimum. For example, if the exposure time reaches a maximum value via the process 200 while the gain is held constant, then the exposure control component 130 may hold the exposure time constant (e.g., at the maximum value) and proceed to compute values for the gain via process 200.

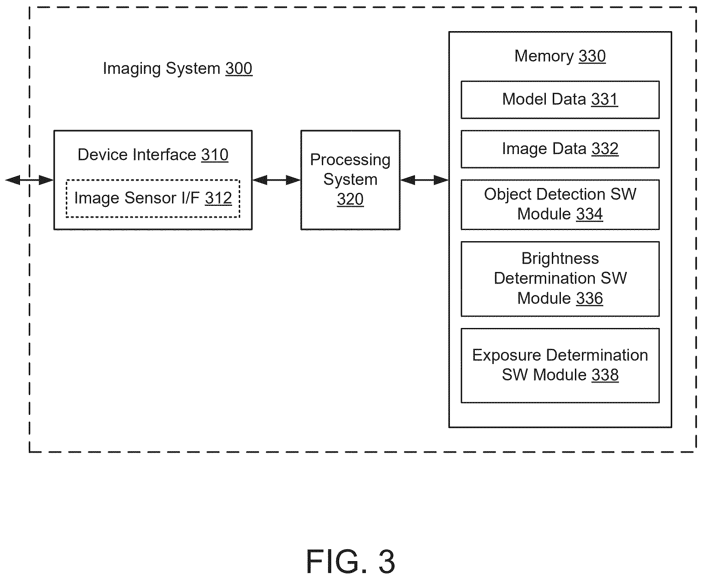

FIG. 3 shows another block diagram of an example imaging system 300, according to some implementations. More specifically, the imaging system 300 may be configured to detect one or more regions of interest in an image. Further, the imaging system 300 may be configured to determine an exposure setting based on a detected ROI and capture a subsequent image using that exposure setting. In some implementations, the imaging system 300 may be one example of the imaging system 100 of FIG. 1. The imaging system 300 includes a device interface 310, a processing system 320, and a memory 330.

The device interface 310 is configured to communicate with one or more components of an image capture device (such as the image capture component 110 of FIG. 1). In some implementations, the device interface 310 may include an image sensor interface (I/F) 312 configured to receive an image via an image capture device. In some implementations, the image sensor interface 312 may capture an image using an exposure setting.

The memory 330 may include a data store 331 configured to store one or more models for object detection, and a data store 332 configured to store one or more received images and output data of object detection of images, including for example ROI information. The memory 330 also may include a non-transitory computer-readable medium (including one or more nonvolatile memory elements, such as EPROM, EEPROM, Flash memory, or a hard drive, among other examples) that may store at least the following software (SW) modules:

- an object detection SW module 334 to detect one or more objects based on a first image and determine respective corresponding ROIs in the first image;
- a brightness determination SW module 336 to determine a brightness for an image; and
- an exposure determination SW module 738 to determine an exposure setting based on the brightness .

Each software module includes instructions that, when executed by the processing system 320, causes the imaging system 300 to perform the corresponding functions.

The processing system 320 may include any suitable one or more processors capable of executing scripts or instructions of one or more software programs stored in the imaging system 300 (such as in the memory 330). For example, the processing system 320 may execute the object detection SW module 334 to determine one or more ROIs in a first image, may execute the brightness determination SW module 336 to determine a brightness for the image, and may execute the exposure determination SW module 338 to determine an exposure setting based on the brightness.

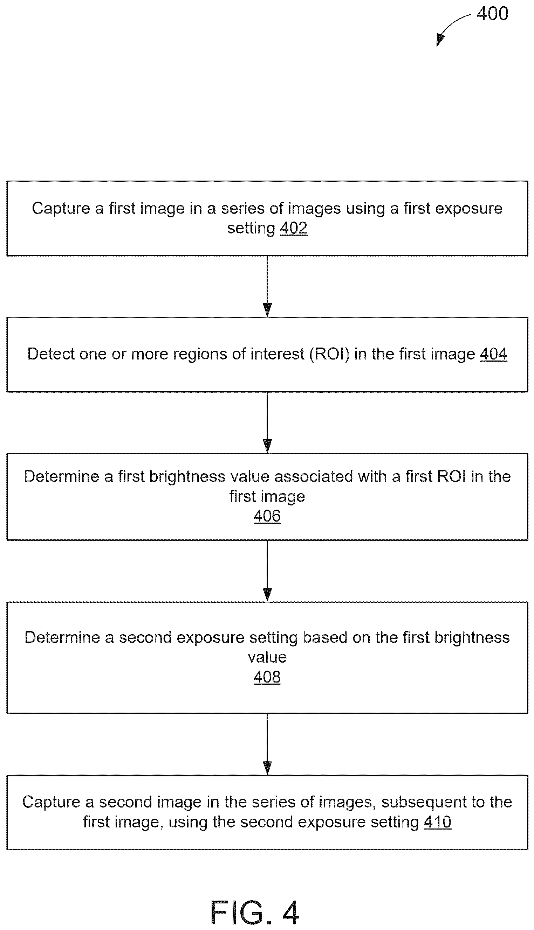

FIG. 4 shows an illustrative flowchart depicting an example operation 400 for object detection, according to some implementations. In some implementations, the example operation 400 may be performed by an imaging system such as the imaging system 100 of FIG. 1.

The imaging system may capture a first image in a series of images using a first exposure setting (402). The imaging system may detect one or more regions of interest (ROI) in the first image (404). The imaging system may determine a first brightness value associated with a first ROI in the first image (406). The imaging system may determine a second exposure setting based on the first brightness value (408). The imaging system may capture a second image in the series of images, subsequent to the first image, using the second exposure setting (410).

In some aspects, the imaging system may compute a mean luma value of the first ROI.

In some aspects, the imaging system may compare the first brightness value with a predetermined range of brightness values.

In some aspects, the imaging system may, based on a determination that the first brightness value is within the predetermined range of brightness values, set the first exposure setting as the second exposure setting.

In some aspects, the imaging system may determine the second exposure setting based on the first brightness value and a target brightness value.

In some aspects, the imaging system may determine the second exposure setting based further on a second brightness value associated with a third image in the series of images and a third exposure setting, the third image captured prior to the first image using the third exposure setting.

In some aspects, the imaging system may compute a first exposure adjustment factor based on the first brightness value and the target brightness value; compute a first target exposure setting based on the first exposure setting and the first exposure adjustment factor; compute a second exposure adjustment factor based on the second brightness value and the target brightness value; compute a second target exposure setting based on the third exposure setting and the second exposure adjustment factor; and computehi the second exposure setting based on the first target exposure setting and the second target exposure setting.

In some aspects, the imaging system may compute a sum of the first target exposure setting and the second target exposure setting.

In some aspects, the imaging system may detect a plurality of ROIs in the first image, and the first ROI has a largest area amongst the plurality of ROIs.

In some aspects, the imaging system may determine a second brightness value associated with the first image; determine a third exposure setting based on the second brightness value; and capture a third image in the series of images, subsequent to the first image, using the third exposure setting.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method, comprising:

   capturing a first image in a series of images using a first exposure setting;
   detecting one or more regions of interest (ROI) in the first image;
   determining a first brightness value associated with a first ROI in the first image;
   determining a second exposure setting based on the first brightness value; and
   capturing a second image in the series of images, subsequent to the first image, using the second exposure setting.

2. The method of claim 1, wherein determining the first brightness value comprises computing a mean luma value of the first ROI.

3. The method of claim 1, wherein determining the second exposure setting comprises comparing the first brightness value with a predetermined range of brightness values;
   wherein, optionally, determining the second exposure setting further comprises, based on a determination that the first brightness value is within the predetermined range of brightness values, setting the first exposure setting as the second exposure setting.

4. The method of claim 1, wherein determining the second exposure setting comprises determining the second exposure setting based on the first brightness value and a target brightness value.

5. The method of claim 4, wherein determining the second exposure setting comprises determining the second exposure setting based further on a second brightness value associated with a third image in the series of images and a third exposure setting, the third image captured prior to the first image using the third exposure setting.

6. The method of claim 5, wherein determining the second exposure setting comprises:

computing a first exposure adjustment factor based on the first brightness value and the target brightness value;
computing a first target exposure setting based on the first exposure setting and the first exposure adjustment factor;
computing a second exposure adjustment factor based on the second brightness value and the target brightness value;
computing a second target exposure setting based on the third exposure setting and the second exposure adjustment factor; and
computing the second exposure setting based on the first target exposure setting and the second target exposure setting;
wherein, optionally, computing the second exposure setting comprises computing a sum of the first target exposure setting and the second target exposure setting.

7. The method of claim 1, wherein detecting one or more regions of interest (ROI) in the first image comprises detecting a plurality of ROIs in the first image, and the first ROI has a largest area amongst the plurality of ROIs.

8. The method of claim 1, further comprising:

determining a second brightness value associated with the first image;
determining a third exposure setting based on the second brightness value; and
capturing a third image in the series of images, subsequent to the first image, using the third exposure setting.

9. A computing system, comprising:

an imaging sensor;
one or more processors; and
a memory coupled to the one or more processors, the memory storing instructions that, when executed by the one or more processors, cause the computing system to:

capture a first image in a series of images using a first exposure setting;
detect one or more regions of interest (ROI) in the first image;
determine a first brightness value associated with a first ROI in the first image;
determine a second exposure setting based on the first brightness value; and
capture a second image in the series of images, subsequent to the first image, using the second exposure setting.

10. The computing system of claim 9, wherein the instructions, when executed by the one or more processors, cause the computing system to compute a mean luma value of the first ROI.

11. The computing system of claim 9, wherein the instructions, when executed by the one or more processors, cause the computing system to compare the first brightness value with a predetermined range of brightness values;
wherein, optionally, the instructions, when executed by the one or more processors, cause the computing device to, based on a determination that the first brightness value is within the predetermined range of brightness values, set the first exposure setting as the second exposure setting.

12. The computing system of claim 9, wherein the instructions, when executed by the one or more processors, cause the computing device to determine the second exposure setting based on the first brightness value and a target brightness value.

13. The computing system of claim 12, wherein the instructions, when executed by the one or more processors, cause the computing device to determine the second exposure setting based further on a second brightness value associated with a third image in the series of images and a third exposure setting, the third image captured prior to the first image using the third exposure setting.

14. The computing system of claim 13, wherein the instructions, when executed by the one or more processors, cause the computing device to:

compute a first exposure adjustment factor based on the first brightness value and the target brightness value;
compute a first target exposure setting based on the first exposure setting and the first exposure adjustment factor;
compute a second exposure adjustment factor based on the second brightness value and the target brightness value;
compute a second target exposure setting based on the third exposure setting and the second exposure adjustment factor; and
compute the second exposure setting based on the first target exposure setting and the second target exposure setting;
wherein, optionally, the instructions, when executed by the one or more processors, cause the computing device to compute a sum of the first target exposure setting and the second target exposure setting.

15. The computing system of claim 9, wherein the instructions, when executed by the one or more processors, cause the computing device to detect a plurality of ROIs in the first image, and the first ROI has a largest area amongst the plurality of ROIs.

16. The computing system of claim 9, wherein the instructions, when executed by the one or more processors, cause the computing device to:

determine a second brightness value associated with the first image;
determine a third exposure setting based on the second brightness value; and
capture a third image in the series of images, subsequent to the first image, using the third exposure setting.

FIG. 1

FIG. 2

Imaging System 300

Memory 330

Model Data 331

Image Data 332

Object Detection SW Module 334

Brightness Determination SW Module 336

Exposure Determination SW Module 338

Device Interface 310

Image Sensor I/F 312

Processing System 320

FIG. 3

400

Capture a first image in a series of images using a first exposure setting 402

Detect one or more regions of interest (ROI) in the first image 404

Determine a first brightness value associated with a first ROI in the first image
406

Determine a second exposure setting based on the first brightness value
408

Capture a second image in the series of images, subsequent to the first image, using the second exposure setting 410

FIG. 4

Europäisches
Patentamt

European
Patent Office

Office européen
des brevets

# EUROPEAN SEARCH REPORT

**Application Number**

**EP 26 15 0983**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 866 408 A (BEIJING HIRAIN TECH CO LTD) 28 March 2023 (2023-03-28) | 1-6, 8-14,16 | INV. H04N23/71 H04N23/72 H04N23/73 |
| Y | * claims 1, 10 * <br> * paragraph [0145] - paragraph [0151] * <br> ----- | 7,15 | |
| Y | US 2005/264658 A1 (RAY LAWRENCE A [US] ET AL) 1 December 2005 (2005-12-01) <br> * paragraph [0034] * <br> ----- | 7,15 | |

**TECHNICAL FIELDS SEARCHED (IPC)**

H04N

The present search report has been drawn up for all claims

| Place of search | Date of completion of the search | Examiner |
|---|---|---|
| The Hague | 20 April 2026 | Benzeroual, Karim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................
& : member of the same patent family, corresponding
document

EPO FORM 1503 03.82 (P04C01)

## EP 4 776 645 A1

### ANNEX TO THE EUROPEAN SEARCH REPORT
### ON EUROPEAN PATENT APPLICATION NO.

EP 26 15 0983

20-04-2026

| Patent document cited in search report | Publication date | Patent family member(s) | Publication date |
|---|---|---|---|
| CN 115866408 A | 28-03-2023 | NONE | |
| US 2005264658 A1 | 01-12-2005 | DE 60116949 T2 | 19-10-2006 |
| | | EP 1128316 A1 | 29-08-2001 |
| | | JP 2001309225 A | 02-11-2001 |
| | | JP 2010045819 A | 25-02-2010 |
| | | US 6940545 B1 | 06-09-2005 |
| | | US 2005264658 A1 | 01-12-2005 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63744604